# EUROPÄISCHE PATENTSCHRIFT

(11) **EP 2 919 584 B1**
(45) Veröffentlichungstag und Bekanntmachung des Hinweises auf die Patenterteilung: **15.02.2023**
(21) Anmeldenummer: 13789778.1
(22) Anmeldetag: 11.11.2013
(51) Int. Cl.: A01N 53/00, A01N 25/10, A01P 7/02, A01K 51/00, A01N 25/34

(54) **FORMKÖRPER ZUR BEKÄMPFUNG VON VARROA-MILBEN**
MOULDED ARTICLE FOR COMBATING VARROA MITES
CORPS MOULÉS POUR LUTTER CONTRE LES ACARIENS VARROA

(30) Priorität: 13.11.2012 EP 12192358; 12.07.2013 EP 13176238
(43) Veröffentlichungstag der Anmeldung: 23.09.2015
(73) Patentinhaber: Bayer Animal Health GmbH, 51368 Leverkusen (DE)
(72) Erfinder: KRIEGER, Klemens, 51789 Lindlar (DE); LÖHR, Reinhold, 51469 Bergisch Gladbach (DE); JIRITSCHKA, Wolfgang, 42799 Leichlingen (DE); KOENIGER, Nikolaus, 61440 Oberursel (DE); KOENIGER, Gudrun, 61440 Oberursel (DE)
(74) Vertreter: Cohausz & Florack
(86) Internationale Anmeldenummer: PCT/EP2013/073518
(87) Internationale Veröffentlichungsnummer: WO 2014/076036

(56) Entgegenhaltungen:
- EP-A1- 0 441 750
- WO-A1-02/23981
- WO-A1-2006/000335
- DATABASE WPI Week 199624 Thomson Scientific, London, GB; AN 1996-237530 XP002720277, "Synthesis of polymer membrane cotg. anti-varroa agent", & RU 2 045 176 C1 (PLASTICS RES INST) 10. Oktober 1995 (1995-10-10)

## Beschreibung

Die vorliegende Erfindung betrifft Formkörper die sich zur Bekämpfung von Varroa-Milben bei Bienen eignen.

Die parasitische Honigbienenmilbe Varroa destructor ist ein natürlicher Parasit der asiatischen Honigbienenart Apis cerana. Neben der asiatischen Honigbiene gibt es nur noch die westliche Honigbiene Apis mellifera, die für die Bienenhaltung durch den Menschen geeignet ist. Die natürlichen Verbreitungsgebiete beider Honigbienenarten sind durch die Wüsten und Gebirge des Mittleren Ostens und Vorderasiens voneinander getrennt. Erst durch das Verbringen von Völkern der westlichen Honigbienen in das natürliche Verbreitungsgebiet der asiatischen Honigbiene konnten die Milben im letzten Jahrhundert auch diesen neuen Wirt parasitieren und sich mit diesem auf allen Kontinenten mit Ausnahme von Australien und der Antarktis verbreiten. Anders als auf ihrem natürlichen Wirt können sich die Milben sowohl auf der männlichen Brut, den Drohnenlarven und Puppen, die von den Milben bevorzugt werden, als auch auf den weiblichen Arbeiterlarven und Puppen fortpflanzen. Der Vermehrung sind - anders als bei der asiatischen Biene - keine natürlichen Grenzen gesetzt. Zum einen kommt es zu einer direkten Schädigung der Bienenbrut durch die hämatophagen Milben, aber die Milben sind auch Vektoren von bakteriellen und viralen Infektionserregern, so dass es auch zu einer indirekten Schädigung kommt. Ohne eine wirksame Bekämpfung der Milben gehen die Bienenvölker früher oder später ein.

Als Bekämpfungsmaßnahmen empfehlen sich biotechnische Maßnahmen, wie das Entfernen und Vernichten der von den Milben bevorzugten Drohnenbrut, und chemotherapeutische Maßnahmen, d.h. die Anwendung von Substanzen und Zubereitungen von Substanzen, die selektiv die Milben töten aber die Bienen schonen. Während der Fortpflanzung befindet sich allerdings die Mehrzahl der Milben in den mit einem dünnen Wachsdeckel verschlossenen Brutzellen und entzieht sich dort der Einwirkung von Bekämpfungsmitteln. Nur während der Zeit, in der die Bienenkönigin keine Eier legt und die Bienen keine Brut anlegen, befinden sich alle Milben auf adulten Bienen, wo sie einer Behandlung zugänglich sind. Präparate mit einer kurzen Wirkdauer müssen deshalb in der brutfreien Zeit der Bienenvölker angewendet werden. Die Mehrzahl der Bienenvölker geht jedoch im Spätsommer und Herbst ein, wenn sich durch das Nachlassen der Brutaktivität der Bienen immer mehr Milben in einer geringer werden Anzahl von Brutzellen konzentrieren und die Bienenbrut so nachhaltig schädigen.

Vor diesem Hintergrund war die Entwicklung von Verdampfersystemen von organischen Säuren und ätherischen Ölen sowie von Polymermatrix- Wirkstoffträgern, die den in die Matrix eingearbeiteten Wirkstoff über einen mehrwöchigen Zeitraum an der Oberfläche freisetzen, ein großer Fortschritt. Diese Wirkstoffträger werden zwischen die Brutwaben der Bienenvölker platziert, so dass sie beidseitig von den Bienen belaufen werden können, wobei der Wirkstoff von der Oberfläche der Wirkstoffträger mechanisch abgenommen und von den Bienen durch den sozialen Körperkontakt im Bienenstock verteilt wird. So gelangt er auch auf die Varroamilben. Die während ihrer Reprqduktionsphase in den Brutzellen vor der varroaziden Wirkung der Behandlung geschützten Milben werden nach ihrem Schlüpfen nachhaltig erfasst.

Jüngere Untersuchungen (Grünewald B; Fuchs S (2011): AREA-WIDE VARROA TREATMENTS WITH ALTERNATING COUMAPHOS AND FLUMETHRIN ON HONEYBEE COLONIES: A FIELD STUDY IN GERMANY. Poster Apimondia Congress Buenos Aires.) zeigen, dass es im Spätsommer, nach der Honigentnahme, zu einem hohen Varroamilbentransfer von stark infizierten zu wenig infizierten (erfolgreich behandelten) Bienenvölkern kommen kann. D.h. eine erfolgreiche Sommerbehandlung der Bienenvölker (z.B. mit Ameisensäure) bietet keinen hinreichenden Schutz bis zur Winterbehandlung in der brutfreien Zeit. Die hier beschriebenen Formkörper sollen Bienenvölker vor einem Milbeneintrag aus stark infizierten Völkern anderer Bienenstände schützen und so eine gesunde Überwinterung der Bienenvölker ermöglichen.

Aus WO00/72683 ist bereits ein Verfahren zur Bekämpfung der Parasitose bei Bienen bekannt, wobei eine Kombination von Coumaphos mit einem Plastikmaterial verwendet wird, z.B. in Form von Coumaphos-haltigen Plastikstreifen, die in einen Bienenstock gehängt werden können.

WO02/23981 betrifft bereits eine antiparasitäre Bienenschleuse für Bienenstöcke, die aber nochmals verbessert werden konnte.

WO2006/00335 beschreibt wirkstoffhaltige feste Formkörper zur äußerlichen Anwendung gegen Parasiten an Tieren.

EP0441750 A1 betrifft eine Vorrichtung zur Applikation eines Wirkstoffs bei Insekten, wie z.B. Bienen.

Die Erfindung betrifft:
1. Feste Formkörper auf Basis einer Polyvinlychlorid-Matrix enthaltend
   - 0,1 bis 5 Gew.-% Flumethrin
   - 5 bis 25 Gew.-% eines Glycerinesters oder Propylenglykolesters mit aliphatischen unverzweigten C₈-C₁₂-Fettsäuren
   - 1 bis 30 Gew.-% eines zusätzlichen Weichmachers
   - sowie ggf. weitere Hilfs- und Zusatzstoffe
wobei die Formkörper eine Dicke von 1 bis 5 mm haben und Löcher mit einem Durchmesser von 6 - 9 mm aufweisen und wobei es sich bei dem weiteren Weichmacher um Di-n-butyladipat handelt.

Die Formkörper enthalten einen akariziden Wirkstoff der eine möglichst geringe Toxizität gegenüber Bienen aufweist.

Die Formkörper enthalten erfindungsgemäß den akariziden Wirkstoff Flumethrin in Konzentrationen von 0,1 bis 5 Gew.-%, besonders bevorzugt 0,5 bis 2 Gew.-% oder gemäß einer weiteren besonders bevorzugten Ausführungsform 0,5 bis 2,5 Gew.-% bezogen auf die Gesamtmasse der festen Formulierung.

Die hierin beschriebenen Formkörper enthalten einen Glycerinester oder Propylenglykolester mit C₈-C₁₂-Fettsäuren; dies sind vorzugsweise aliphatische, unverzweigte gesättigte Fettsäuren, wie z.B. Capryl-, Caprin- oder Laurinsäure. Vorzugsweise sind in diesen Estern alle Hydroxylgruppen des zugrundeliegenden Alkohols verestert, d.h. es handelt sich um Propylenglykoldiester oder um Triglyceride. Als bevorzugte Beispiele für solche Ester seien Capryl-Caprinsäure-Triglycerid (Miglyol 812) und Propylenglykoldicaprylat/-dicaprat genannt. Die erfindungsgemäßen Formkörper enthalten den Glycerinester oder Propylenglykolester mit C₈-C₁₂-Fettsäuren in Anteilen von 5 bis 25 Gew.-%, besonders bevorzugt 7 bis 25 Gew.-%, ganz besonders bevorzugt 15 bis 25 Gew.-% (bezogen auf die jeweilige Gesamtabmischungsmasse). Capryl-Caprinsäure-Triglycerid (Miglyol 812, der Fa. Sasol Germany GmbH/Witten, CAS-Nr. 73398-61-5) ist auch unter der Bezeichnung MKT (mittelkettige Triglyceride) bekannt. Propylenglykoldicaprylat/-dicaprat (Miglyol 840 der Fa. Sasol/Witten, CAS-Nr. 68583-51-7) ist der Propylenglykoldiester der Capryl- und Caprinsäure, im Deutschen Arzneibuch 9 (DAB 9) ist es als Propylenglykoloctanoatdecanoat beschrieben. In üblichen Qualitäten der beiden Ester sind auch kleine Anteile von C₆- und C₁₂-Fettsäuren mit verestert. Siehe auch die Einträge "Miglyol 812-Neutralöl" und "Miglyol 840" in H.P. Fiedler, Lexikon der Hilfsstoffe, Editio Cantor Verlag Aulendorf, 4. überarbeitete und ergänzte Auflage, 1996, Bd. 2, S. 1008/1009.

Die erfindungsgemäßen Formkörper mit Propylenglykoldicaprylat/-dicaprat sind bevorzugt.

Als Trägersubstanz oder Basis für die Formkörper kommen grundsätzlich flexible thermoplastische Polyolefine (z. B. Polyethylen) oder Polyvinylharze in Frage. Erfindungsgemäß wird Polyvinylchlorid-Homopolymer (PVC) eingesetzt.

Die hierin beschriebenen Formkörper können gegebenenfalls zusätzlich übliche Weichmacher enthalten, die üblicherweise zum Weichmachen von festen Polyvinylchlorid-Harzen verwendet werden.

Als erfindungsgemäßer zusätzlicher Weichmacher wird Di-n-butyladipat eingesetzt. Andere geeignete zusätzliche jedoch nicht erfindungsgemäße Weichmacher sind beispielsweise Phosphorsäureester oder alternative Adipinsäureester, wie z. B. Diisobutyladipat.

Nicht erfindungsgemäß können auch andere Ester, wie die Ester von Azelainsäure, Maleinsäure, Ricinolsäure, Myristinsäure, Palmitinsäure, Ölsäure, Sebacinsäure, Stearinsäure und Trimellithsäure, sowie komplexe lineare Polyester, polymere Weichmacher und epoxydierte Sojabohnenöle verwendet werden.

In den erfindungsgemäßen Formkörpern wird als zusätzlicher Weichmacher Di-n-butyladipat in Konzentrationen von 1 bis 30 Gew.-%, bevorzugt 7 bis 22 Gew.-%, eingesetzt.

Die Gesamtmenge an Weichmacher, d.h. die Menge an Capryl-Caprinsäure-Triglycerid oder Propylenglykoldicaprylat/-dicaprat zuzüglich der Menge an zusätzlichem Weichmacher sollte 50 Gew.-%, bevorzugt 45 Gew.-%, besonders bevorzugt 35 Gew.-% nicht übersteigen. Die Gesamtmenge an Weichmachern liegt daher in den Bereichen von etwa 5 bis 50 Gew.-%, vorzugsweise etwa 15 bis 45 Gew.-%, besonders bevorzugt 15 bis 35 Gew-% der gesamten Zusammensetzung. Gemäß einer weiteren besonders bevorzugten Ausführungsform übersteigt die Gesamtmenge an Weichmacher nicht 40 Gew.-% der gesamten Zusammensetzung, in diesem Fall liegt die Gesamtmenge an Weichmacher bei 15 bis 40 Gew.-%.

In den Formkörpern können noch weitere übliche Bestandteile, wie Stabilisierungsmittel, Schmiermittel, Formtrennmittel, Füllstoffe und Färbematerialien, enthalten sein; in der Regel werden dadurch die grundlegenden Eigenschaften der Zusammensetzung nicht wesentlich verändert.

Geeignete Stabilisierungsmittel sind Antioxidationsmittel und Mittel, welche die Bänder vor ultravioletter Strahlung und unerwünschtem Abbau während der Bearbeitung, wie Strangpressen schützen. Einige Weichmacher wie epoxidiertes Sojabohnenöl, wirken gleichzeitig als Stabilisierungsmittel. Als Schmiermittel können beispielsweise Stearinsäure oder ihre Salze (Stearate) oder Polyethylene mit niedrigem Molekulargewicht verwendet werden. Bevorzugt wird Stearinsäure verwendet. Diese Bestandteile werden üblicherweise in einer Konzentration bis zu etwa 5 Gew.-%, bevorzugt bis zu 3 Gew.-% der gesamten Zusammensetzung verwendet.

Soweit nicht anders angegeben, sind unter %-Angaben Gewichtsprozent bezogen auf die Gesamtabmischungsmasse zu verstehen. "Gesamtabmischungsmasse" ist die fertige Masse, die dann durch geeignete Verfahren geformt wird.

Die Formkörper werden vorzugsweise durch Schmelzextrusion, Strangpressen oder Spritzguss hergestellt.

Die Wahl des Verarbeitungsverfahrens zur Herstellung der Formkörper richtet sich technisch grundsätzlich nach den rheologischen Eigenschaften des polymeren Trägermaterials und der Form des gewünschten Formkörpers. Die Verarbeitungsverfahren können nach der Verarbeitungstechnologie oder nach der Art der Formgebung eingestellt werden. Bei der Verfahrenstechnologie kann man die Verfahren nach den bei ihnen durchlaufenen rheologischen Zuständen unterteilen. Danach kommen für viskose polymere Trägermaterialien Gießen, Pressen, Spritzgießen und Auftragen und für elastoviskose Polymere Spritzgießen, Strangpressen (Extrudieren), Kalandrieren, Walzen und gegebenenfalls Kneten in Frage. Nach Art der Formgebung eingeteilt, lassen sich die erfindungsgemäßen Formkörper durch Gießen, Tauchen, Pressen, Spritzgießen, Extrudieren, Kalandrieren, Prägen, Biegen, Tiefziehen etc. herstellen. Ein Beschichten von festen Grundträgern kommt ebenfalls in Frage. Durch Nacharbeiten können die Formkörper ihrem funktionellen Anspruch angepaßt werden.

Diese Verarbeitungsverfahren sind an sich bekannt und bedürfen keiner näheren Erklärung.

Die erfindungsgemäßen festen Formkörper haben eine Materialdicke von 1 bis 5 mm, ganz besonders bevorzugt 1 bis 3 mm.

Bienenstöcke (Bienenbeuten) können unterschiedliche Formen haben und aus unterschiedlichen Materialien bestehen. Unter einem Bienenstock (einer Bienenbeute) soll hier die Behausung für jeweils ein Bienenvolk verstanden werden. Die erfindungsgemäßen Formkörper haben vorzugsweise eine Form die zum Einflugloch üblicher Bienenstöcke (auch als Bienenbeute bezeichnet) passt und eine Art Schleuse bildet. Die Formkörper haben Löcher und sind so geformt, dass die Bienen gezwungen sind, beim Verlassen des Bienenstocks und bei der Rückkehr in den Bienenstock diese Löcher zu passieren. Die Löcher haben erfindungsgemäß einen Durchmesser von 6 bis 9 mm, bevorzugt 6 bis 8 mm, besonders bevorzugt 6,5 bis 7,5 mm. Um eine ausreichende Belüftung des Bienenstocks sicherzustellen, sollten die Löcher insgesamt pro Bienenstock eine Fläche von 5 bis 26 cm² bevorzugt 10 bis 15 cm² haben. Daraus ergibt sich, dass pro Bienenstock (mit einem Einflugloch) etwa 10 bis 100 Löcher vorhanden sein sollten, vorzugsweise 15 bis 80 Löcher, besonders bevorzugt 15 bis 60, ganz besonders bevorzugt, 25 bis 40, insbesondere 20 bis 30 Löcher. Die Anzahl und Größe der Löcher muss so gewählt werden, dass eine ausreichende Belüftung des Bienenstocks auch bei extremen Temperaturen gewährleistet ist und dass sie kein mechanisches Hindernis darstellen, z. B. beim Hinaustragen toter Drohnen (männliche Bienen).

Die Form und Größe der erfindungsgemäßen Formkörper sollte so gewählt werden, dass sie zu den Einfluglöchern üblicher Bienenstöcke passen. Beispielsweise können sie eine rechteckige Form mit einer Höhe von 1 bis 10 cm, vorzugsweise 1,5 bis 4 cm, insbesondere 2 bis 4 cm oder insbesondere 1,5 bis 2,5 ein und Breiten von 10 bis 50 cm, bevorzugt 15 bis 40 cm haben.

In der praktischen Anwendung können die erfindungsgemäßen Formkörper in an sich bekannter Weise am Bienenstock angebracht werden, sodass die Bienen beim Kommen oder Verlassen des Bienenstocks die Öffnungen in dem Formkörper als ein Art Schleuse passieren müssen. Zur Befestigung am Bienenstock oder an eine Halterung können z. B. Befestigungsmittel wie Nägel, Reißzwecken, Schrauben oder Klebstoff verwendet werden. Auch andere Vorrichtungen sind denkbar, z.B. solche bei denen die erfindungsgemäßen Formkörper in Führungen eingeschoben werden. Ebenfalls denkbar ist ein geeigneter Halter, an dem in einfacher Weise der erfindungsgemäße Formkörper angebracht werden kann; der Halter ist wiederum so konstruiert, dass er samt Formkörper problemlos am Bienenstock angebracht werden kann.

Überraschenderweise zeigen die erfindungsgemäßen Formkörper eine ausgezeichnete Wirkung gegen Varroa-Milben bei Bienen, wenn die Formkörper in der beschriebenen Weise am Eingang des Bienenstocks angebracht werden.

Die erfindungsgemäßen Formkörper zeichnen sich durch gute Bienenverträglichkeit aus. Beim Passieren der Formkörper werden die Varroa-Milben entweder direkt oder nach einer gewissen Zeit abgetötet. Sofern die Milben nicht direkt abgetötet werden, kann aber in der Regel zumindest die weitere Reproduktion der Milben verhindert werden. Es gibt Hinweise darauf, dass die Verwendung von Propylenglykoldicaprylat/-dicaprat die Bienenverträglichkeit der Formkörper verbessert. Wegen der chemischen Ähnlichkeit ist zu vermuten, dass auch Capryl-Caprinsäure-Triglycerid die Bienenverträglichkeit verbessert.

Es gibt Hinweise darauf, dass erfindungsgemäße Formkörper, die Flumethrin enthalten, besonders effektiv sind. Es scheint, dass die Bienen durch das Flumethrin in gewisser Weise gegen eine Infestation durch Varroa-Milben geschützt werden, d.h. es gibt Hinweise darauf, dass Bienen, die einen erfindungsgemäßen Flumethrin-haltigen Formkörper passiert haben, einen gewissen für eine Weile andauernden Schutz gegen die Infestation durch Varroa-Milben erhalten.

Weiterhin gibt es Anzeichen dafür, dass auch Propylenglykoldicaprylat/-dicaprat per se die Bienen gegen Infestation durch Varroa-Milben schützt. Es ist anzunehmen, dass dies auch auf Capryl-Caprinsäure-Triglycerid zutrifft.

Bienen sind die Östliche Honigbiene (Apis cerana) und insbesondere die Westliche Honigbiene (Apis mellifera.

Varroa-Milben sind insbesondere Varroa destructor.

Da die Funktion der erfindungsgemäßen Formkörper vor allem darauf basiert, dass die Bienen die Löcher passieren, ist ihr Einsatz vor allem in der flugaktiven Zeit der Bienen sinnvoll. Es ist aber nicht zwingend erforderlich, die Formkörper außerhalb der flugaktiven Periode zu entfernen.

Bei der Anwendung der erfindungsgemäßen Formkörper kann es zur Vermeidung von Resistenzbildung empfehlenswert sein, Formkörper, die Wirkstoffe mit unterschiedlichen Wirkmechanismen enthalten, alternierend einzusetzen.

### Beispiele

### Beispiel 1

Zusammensetzung:

| | |
|---|---|
| Flumethrin | 2,5 Gew.-% |
| Di-n-butyladipat | 8,9 Gew.-% |
| Propylenglycoloctanoatdecanoat (Miglyol 840) | 20 Gew.-% |
| Epoxidiertes Sojabohnenöl | 1,1 Gew.-% |
| Stearinsäure | 2 Gew.-% |
| PVC | 64,5 Gew.-% |
| Titandioxid | 1 Gew.-% |

### Herstellung:

Die Mischung aus Titandioxid und PVC wird in einem Mischer mit dem Gemisch aus Di-n-butyladipat, Propylenglycoloctanoatdecanoat, epoxidiertem Sojabohnenöl und Flumethrin gemischt. Man mischt unter Wärme solange, bis die Mischung homogen ist. Das Erwärmen fördert das Einziehen der Wirkstoff-Weichmachermischung in das PVC. Nach der anschließenden homogenen Verteilung der Stearinsäure kann die Mischung mit an sich bekannten Verfahren zu Formkörpern in der gewünschten Dicke verarbeitet werden.

Es wurden Formkörper hergestellt, die sich für die Anwendung an Bienenstöcken eignen. Diese haben folgende Abmessungen:
Länge: 15 cm, Breite 3 cm, Dicke: 2 mm.
Die Formkörper weisen 15 Löcher mit je 7 mm Durchmesser auf.

### Beispiel 2

Zusammensetzung:

| | |
|---|---|
| Coumaphos | 7,5 Gew.-% |
| Di-n-butyladipat | 8,9 Gew.-% |
| Propylenglycoloctanoatdecanoat (Miglyol 840) | 20 Gew.-% |
| Epoxidiertes Sojabohnenöl | 1,1 Gew.-% |
| Stearinsäure | 2 Gew.-% |
| PVC | 59,5 Gew.-% |
| Titandioxid | 1 Gew.-% |

Die Mischung aus Titandioxid, PVC und Coumaphos wird in einem Mischer mit dem Gemisch aus Din-butyladipat, Propylenglycoloctanoatdecanoat und epoxidiertem Sojabohnenöl gemischt. Man mischt unter Wärme solange, bis die Mischung homogen ist. Das Erwärmen fördert das Einziehen der Wirkstoff-Weichmachermischung in das PVC. Nach der anschließenden homogenen Verteilung der Stearinsäure kann die Mischung mit an sich bekannten Verfahren zu Formkörpern in der gewünschten Dicke verarbeitet werden.

Es wurden Formkörper hergestellt, die sich für die Anwendung an Bienenstöcken eignen. Diese haben folgende Abmessungen:
Länge: 15 cm, Breite 3 cm, Dicke: 2 mm.
Die Formkörper weisen 15 Löcher mit je 7 mm Durchmesser auf.

### Beispiele 3 bis 16

In der folgenden Tabelle sind als Beispiele 3 bis 12 und 14 bis 16 weitere Zusammensetzungen angegeben, die zur Herstellung erfindungsgemäßer fester Formkörper geeignet sind. Beispiel 13 ist eine Placeboformulierung. Das Beispiel 4 ist nicht erfindungsgemäß.

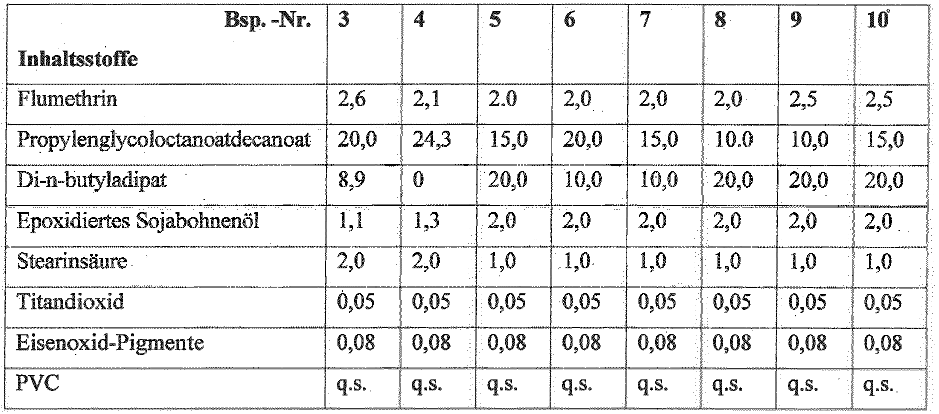

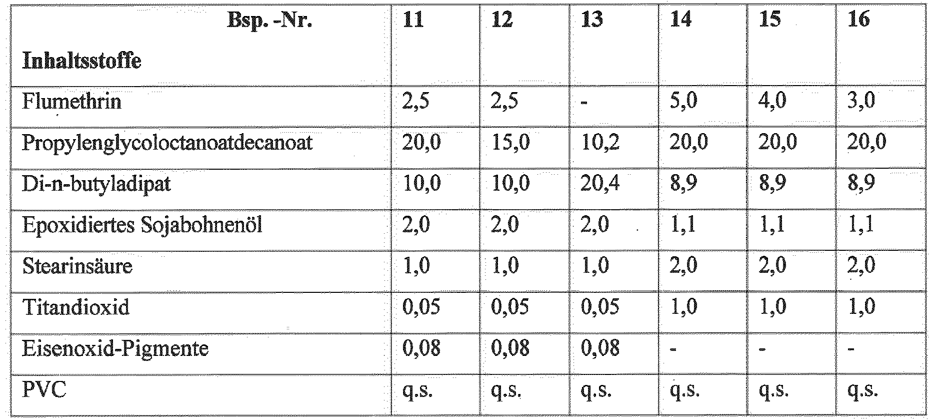

(In den Tabellen sind die Mengen der Inhaltsstoffe in Gew.-% angegeben)

Die Zusammensetzungen der Beispiele 3 bis 16 können analog der Zusammensetzung des Beispiels 1 hergestellt werden. Alternativ können PVC, Titandioxid und Eisenoxidpigmente unter Erwärmen (60°C) gemischt werden, dann wird eine Lösung der restlichen Bestandteile, ausgenommen Stearinsäure, hergestellt und dem PVC-Pigmentgemisch in der Wärme zugemischt. Schließlich wird noch Stearinsäure unter weiterem Rühren und Erwärmen zugegeben und eine homogene Zusammensetzung hergestellt, die nach Abkühlen weiterverarbeitet werden kann.

Aus den fertigen Zusammensetzungen können erfindungsgemäße feste Formkörper z. B. wie in Beispiel 1 angegeben hergestellt werden.

### Biologisches Beispiel:

### Beispiel A:

Zur Beurteilung der Wirksamkeit von erfindungsgemäßen Flumethrin-haltigen PVC-Wirkstoffträgern (Formkörper) am Flugloch von Bienenstöcken wurden am 6. April 2012 12 brütende Bienenvölker in Zander-Magazinbeuten mit je 2 ca. 15 cm langen, ca. 2.5 cm breiten und ca. 2 mm dicken Wirkstoffträgern, die mit 30 Löchern von 7 mm Durchmesser versehen und so am Flugloch positioniert waren, dass die Bienen den Bienenstock ausschließlich durch die Löcher der Wirkstoffträger verlassen oder in diesen zurückkehren konnten. Je drei Völker erhielten Wirkstoffträger mit 3%, 4% und 5% Flumethrin-Gehalt (Bsp. 16, 15 bzw.14). Drei Bienenvölker wurden als Kontrollvölker mit wirkstofffreien Trägern bestückt. Zwischen dem 6. April und dem 2. Mai erfolgte eine tägliche Erfassung des Milbentotenfalls mit Hilfe von Einschubkästen, die den kompletten Beutenboden unterhalb des Wabensitzes der Beuten bedeckten und durch ein nur für die herabfallenden Milben nicht aber für Bienen durchlässiges Metallgitter abgedeckt war.

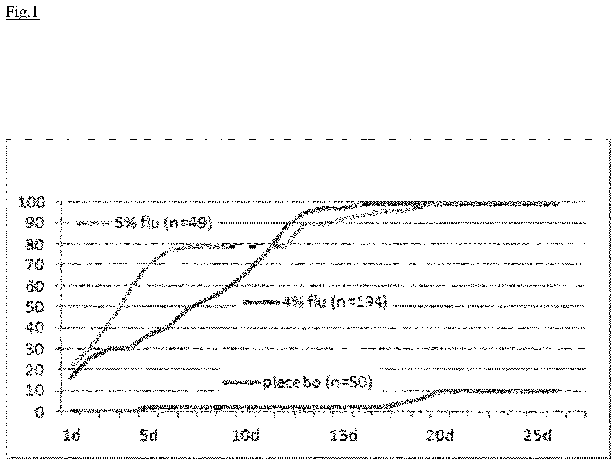

Der erfasste gesamte Milbentotenfall für die verschiedenen Behandlungsgruppen und Völker ist in nachfolgender Tabelle 1 zusammengefasst. Die mit A, B und C bezeichneten Zeilen enthalten die Wirksamkeiten in Prozent für jeweils ein Bienenvolk (n Varroa). Der zeitliche Verlauf des Milbentotenfalls während des Beobachtungszeitraums ist für ausgewählte Völker in der Grafik (Fig. 1), dargestellt. (Wegen des geringen Gesamttotenfalls in der 3%-Gruppe wurde auf eine grafische Darstellung verzichtet.) Die Daten belegen den varroaciden Effekt der Behandlung der Bienenvölker mit dem flumethrinhaltigen Wirkstoffträger.

**Tabelle 1:**

| | Placebo | 5% Flu | 4% Flu | 3% Flu |
|---|---|---|---|---|
| A | 0 (11) | 100 (3) | 66,67 (3) | 90 (10) |
| B | 50 (4) | 100 (49) | 98,97 (194) | 100 (2) |
| C | 10,41 (50) | 100 (7) | 90 (10) | 100 (3) |

## Patentansprüche

1. Feste Formkörper auf Basis einer Polyvinylchlorid-Matrix enthaltend
- 0,1 bis 5 Gew.-% Flumethrin
- 5 bis 25 Gew.-% eines Glycerinesters oder Propylenglykolesters mit aliphatischen unverzweigten C₈-C₁₂-Fettsäuren
- 1 bis 30 Gew.-% eines zusätzlichen Weichmachers
- sowie ggf. weitere Hilfs- und Zusatzstoffe
wobei die Formkörper eine Dicke von 1 bis 5 mm haben und Löcher mit einem Durchmesser von 6-9 mm aufweisen und wobei es sich bei dem zusätzlichen Weichmacher um Di-n-butyladipat handelt.

2. Feste Formkörper gemäß Anspruch 1 enthaltend 7 bis 25 Gew.-% eines Glycerinesters oder Propylenglykolesters mit aliphatischen unverzweigten C₈-C₁₂-Fettsäuren.

3. Feste Formkörper gemäß einem der vorstehenden Ansprüche enthaltend Propylenglykoldicaprylat/-dicaprat als Propylenglykolester mit aliphatischen unverzweigten C₈-C₁₂-Fettsäuren.

4. Feste Formkörper gemäß einem der vorstehenden Ansprüche mit 10 bis 100 Löchern.

5. Feste Formkörper gemäß einem der vorstehenden Ansprüche zur Verwendung zur Bekämpfung von Varroa-Milben bei Bienen, wobei die Bienen beim Verlassen des Bienenstocks und bei der Rückkehr in den Bienenstock diese Löcher der festen Formkörper passieren.

6. Bienenstock umfassend einen festen Formkörper gemäß einem der Ansprüche 1 bis 5.

## Claims

1. Solid shaped articles based on a polyvinyl chloride matrix containing
- 0.1 to 5% by weight of flumethrin, and
- 5 to 25% by weight of a glycerol ester or propylene glycol ester with unbranched aliphatic C8-C₁₂-fatty acids,
- 1 to 30% by weight of an additional plasticizer,
- and optionally further adjuvants and additives,
wherein the shaped articles have a thickness from 1 to 5 mm and include openings with a diameter of 6 - 9 mm and wherein the additional plasticizer is di-n-butyl adipate.

2. Solid shaped articles according to claim 1, containing 7 to 25 % by weight of a glycerol ester or propylene glycol ester with unbranched aliphatic C₈-C₁₂-fatty acids.

3. Solid shaped articles according to one of the preceding claims, in which said propylene glycol ester with unbranched aliphatic C₈-C₁₂-fatty acids is propylene glycol dicaprylate/dicaprate.

4. Solid shaped articles according to one of the preceding claims, including 10 to 100 openings.

5. Solid shaped articles according to one of the preceding claims for use in controlling varroa mites in bees, wherein the bees pass the openings of the solid shaped articles when leaving the beehive or returning to the beehive.

6. Beehive comprising a solid shaped article according to any one of claims 1 to 5.

## Revendications

1. Corps moulés solides à base d'une matrice de chlorure de polyvinyle, contenant
- 0,1 à 5 % en poids de fluméthrine
- 5 à 25 % en poids d'un ester de glycérol ou d'un ester de propylène glycol comportant des acides gras en C₈-C₁₂ aliphatiques non ramifiés
- 1 à 30 % en poids d'un plastifiant supplémentaire
- et éventuellement d'autres adjuvants et additifs
les corps moulés possédant une épaisseur de 1 à 5 mm et présentant des trous d'un diamètre de 6 à 9 mm et le plastifiant supplémentaire étant l'adipate de di-n-butyle.

2. Corps moulés solides selon la revendication 1, contenant 7 à 25 % en poids d'un ester de glycérol ou d'un ester de propylène glycol comportant des acides gras en C₈-C₁₂ aliphatiques non ramifiés.

3. Corps moulés solides selon l'une des revendications précédentes, contenant du dicaprylate/dicaprate de propylène glycol en tant qu'ester de propylène glycol comportant des acides gras en C₈-C₁₂ aliphatiques non ramifiés.

4. Corps moulés solides selon l'une des revendications précédentes, comportant 10 à 100 trous.

5. Corps moulés solides selon l'une des revendications précédentes, destinés à être utilisés pour lutter contre les acariens Varroa chez les abeilles, les abeilles passant à travers lesdits trous des corps moulés solides en quittant la ruche et en revenant dans la ruche.

6. Ruche comprenant un corps moulé solide selon l'une des revendications 1 à 5.
